# EUROPEAN PATENT APPLICATION

(11) **EP 1 531 168 A1**
(43) Date of publication of application: **18.05.2005**
(21) Application number: 04256801.4
(22) Date of filing: 04.11.2004
(51) Int. Cl.: C08J 9/28

(54) **Process for the removal of porogens from temperature sensitive macroreticular polymers using steam at reduced pressure**

(30) Priority: 17.11.2003 US 715257
(71) Applicant: Rohm and Haas Company, Philadelphia, Pennsylvania 19106-2399 (US)
(72) Inventor: Rosenbaum, Bruce, Fort Washington, Pennsylvania 19034 (US)
(74) Representative: Buckley, Guy Julian

(57) **Abstract**

The present invention relates to an improved method of making a resin including steam stripping porogen from a polymer under vacuum. Optionally, the method includes diluting to remove process aids, and low pressure steam stripping to effect porogen removal. The invention makes adsorbent resins, and adsorbent resins free of animal derived products. In another aspect, the invention provides for a resin made using the improved method, and a downstream product made utilizing the resin in a manufacturing process used to make the product. The downstream product is a drug or precursor thereof, and is optionally cephalosporin C and insulin.

## Description

This invention relates to a method of, and system for the removal of porogens from temperature sensitive or temperature stable macroreticular polymers using steam at reduced pressure. It also relates to resins made using the improved method and downstream products, including but not limited to, pharmaceuticals made using the resins in various pharmaceutical processing steps.

Various macroreticular resins are used in pharmaceutical drug processing. These mactroreticular resins have porogens removed from the resins during manufacture prior to use of the resins in drug processing applications. Current methods of removing porogens from macroreticular polymers involve either performing a distillation with the polymer in the aqueous reaction mixture after completion of the polymerization, and then washing with solvent, or washing a dewatered polymer with solvent. Current methods have several drawbacks. One significant drawback involves the use of large quantities of solvents such as methanol for washing the resins to make them free of porogen. This introduces significant cost to the resin manufacturing process both for purchase of the solvent and then for latter disposal and/or regeneration of the solvent. Other drawbacks include distilling the porogen in a reactor (to < 5%); removal of remaining porogen by methanol washing (to < 600 ppm); extensive use of methanol for porogen removal (waste=3.5kg methanol/kg resin); limited porogen recovery/recycle (porogen waste=0.25 kg porogen waste/kg resin); and, the use of animal derived ingredients (gelatin) which may introduce undesirable animal viruses or other microorganisms into the final product.

Previous attempts to utilize steam stripping for porogen removal have failed primarily because either saturated or superheated steam at or above atmospheric pressure was used. As a result, the temperature of the steam exceeded the temperature at which the polymers softened, or deformed, resulting in material with damaged surfaces and loss of porosity. These damaged surfaces and loss of porosity rendered the resins unsuitable for their intended purposes and/or resulted in severely decreased performance characteristics. The current invention eliminates these problems by using operating conditions below the softening point of the desired polymer, or polymerization temperature of the resin.

The invention provides for an improved method of making macroreticular resin beads. The improvement includes steam stripping porogen from the resin beads under vacuum, and optionally, diluting (either serially or continuously) to remove process aids from a mother liquor comprising the resin beads prior to the steam stripping operation. The various processing aids that are removed using the invention include, by way of example, soaps, salts, and dispersion agents. The method includes maintaining a temperature below a polymerization temperature using the vacuum.

It is further appreciated that a downstream product made utilizing the resins described herein is also provided. A downstream product includes, by way of example, a drug or precursor thereof. Exemplary drugs include????lactam antibiotics, of which cephalosporin C is an example; anti-hyperglycemia drugs, of which insulin is an example; aminoglycosides, of which vancomycin is an example; and, Vitamin B12 and derivatives thereof. Effective removal of porogens and other materials leaves a cleaner resin free of residual methanol or other solvents which may interfere with downstream product processing or require that additional cleaning steps be performed by the drug manufacturer prior to use of resins.

The polymeric adsorbent resin is also used in a process for capture/release and purification of a fermentation broth stream. The process may contain a cell harvest step followed by ultrafiltration. The stream is then further purified or clarified by the polymeric adsorbent resin. After the fermentation broth is clarified, it is passed through the polymeric adsorbent resin either in a fixed bed of resin or simulated moving bed of resin in order to capture the target molecule. The adsorptive, e.g. target molecule, is then selectively eluted from the adsorbent resin using either aqueous buffers, organic solvents, or a combination thereof. The target molecule is typically purified from a starting purity of 60-70 % to a targeted purity of > 85 to 99 %. In other cases, the polymeric adsorbent resin is used for further purification of drug streams that are not based on fermentation broths. In these cases, semi-synthetic antibiotics, by way of example, are purified using the protocol noted above.

An additional unexpected discovery of the present invention is that after porogen removal in the manner described above, the polymer is dry and free-flowing. This is significant in that there is an advantage to have a dry polymer in that it can then be further air sifted to the desired particle size range. Use of the above invention eliminates the time-consuming and energy intensive processing step of drying a wet, non-free flowing polymer, and then conducting other processing steps on the dry polymer. A monodispersed resin of the present invention also provides additional manufacturing advantages including decreased pressure drop when used in various applications.

Use of the procedure described herein obviates the need to use biological treatment for effluent at a waste water treatment plant. This results in substantial cost savings in the range of several hundreds of thousands of dollars annually. Conventional processes discharge several thousand kilograms of waste MeOH or other porogen solvents per manufacturing batch. These materials then require disposal which is expensive. Use of the present invention results in zero ("0") kg waste MeOH or other porogen solvent to a waste water treatment plant per batch. The result is an environmentally friendly process.

Prior to the steam stripping of the porogen from the polymer, the polymeric beads are separated from a reaction slurry by transferring the bead slurry to a strip column, fitted with a bottom screen, while simultaneously adding dilution water to a transfer pipe. This in-line dilution step effectively dilutes the reaction slurry and reduces solution viscosity making it easier to drain the liquid from the slurry.

This invention differs from a current practice of adding dilution water to the reaction slurry batch-wise, allowing polymer to float to the surface, and then draining the diluted reaction mother liquor down to the level of the beads. A problem of the current technique is that it is very time consuming since beads typically require twelve hours to obtain a desired liquid bead interface so that one can drain the liquid from the beads. Moreover, use of the invention results in a cycle time reduction from 24 hours or more for this mother liquor dilution step to only about a 5 hour cycle time. The use of the steam stripping results in a cycle time reduction from 30 hours for distillation and solvent washing to only about 5 hours, and also reduces or eliminates the need for acetone and/or methanol washing ("solvent washing") from the resin manufacturing process. This results in a fast, environmentally friendly process which reduces energy consumption significantly and also significant reduces the amount of hazardous waste.

Another problem results in filter clogging if a mother liquor is sent directly to a filter without any type of processing. In yet another variant of the invention, an improved method of making resin beads includes removing processing aids from a mother liquor by continuously diluting the mother liquor with a diluent such that the processing aids are removed from the resin beads without clogging a filter.

Depending upon the product and reaction mixture, the batch-wise dilution step may be repeated several times before the remaining slurry is dilute enough to permit the dewatering in a filter in preparation for solvent washing. The use of in-line dilution significantly reduces processing time and improved productivity. By way of example, the conventional process includes the following steps: Polymerization->Floatation->Filtration->Drying->Sieving->Rehydration. By using the in-line dilution step, the floatation step is eliminated reducing the number of total steps from 6 steps to 5 steps: Polymerization->Filtration->Drying->Sieving->Rehydration. Elimination of solvent washing ("e.g., acetone") and drying via steam stripping reduces 6 steps to a combination of one or more of the following 4 steps: Polymerization-> Steam Stripping->Sieving->Rehydration. Additional advantages of the current invention include improved product quality, improved process capability, and improved yields in, for example, adsorbent resins.

The current invention is practiced under vacuum using steam in one variant. This process step allows the temperature to be maintained below 100°C, in one variant of the invention. This prevents damage to resin beads that occurs when the temperature is at or above 100°C. The damage that is prevented includes uncontrolled post polymerization of residual monomers, and softening and/or damage to the bead surfaces which interferes with the adsorptive properties of the resin beads. Other problems that are eliminated using the current invention include the elimination or substantial reduction in pore collapse after steam application, and bead to bead agglomeration where the beads join by polymerization forming clumps of beads or a single large undesired bead. Both pore collapse and bead agglomeration lead to resin product that has poor performance characteristics.

The vacuum is adjusted to achieve a temperature of operation no greater than a polymerization temperature of a given polymer which is determined empirically by conventional methods. By way of example, the pressure can be about 150 mm mercury absolute to maintain a temperature of 60°C. By way of further example, the pressure can be about 350 mm mercury absolute to maintain a temperature of 80°C. It is appreciated that one of skill in the art can adjust the pressure to obtain a desired temperature that will be no greater than the polymerization temperature of a given polymer and that desired ranges can be obtained empirically, but can be, by way of example, in the range of 50 - 90°C. It is appreciated that other variables can also be manipulated such that pore collapse and/or bead agglomeration do not occur.

### Example 1

A spherical, nominally 650 micron harmonic mean size, macroreticular divinyl benzene/ ethyl vinyl benzene copolymer was prepared in a solution polymerization using toluene as the porogen and gelatin as a dispersant to achieve particle size control. The aqueous phase consisted of: DI water (97.4%), gelatin 250 A 30 (0.3%) boric acid (0.3%), Padmac A (1.2%), calcium chloride (0.7%), and sodium hydroxide (0.1%). The organic phase consisted of 80% divinyl bemzene (29.9%), Trigonox 21S catalyst (0.3%), and toluene (69.8%) porogen. The ratio of aqueous to organic was 1.3. The mixture was heated in a nitrogen atmosphere to 70C and held for 12 hours. After polymerization the mixture was heated at atmospheric pressure and held at 88°C for 12 hours to remove most of the toluene as a toluene/ water azeotrope. Toluene remaining in the copolymer after distillation was 3% on a copolymer dry weight basis.

The copolymer and mother liquor were transferred to an 80°C jacketed filter bottom vessel where the mother liquor was allowed to drain. Pressure in the vessel was reduced to 380 mm mercury absolute. Saturated steam at 2311 mm mercury absolute pressure was introduced to the top of the vessel. Steam was fed for eight hours at one bed volume per hour. The vapor stream exiting the vessel was condensed and collected. An organic layer was observed in the condensate.

As a comparative example, a copolymer sample was taken after distillation and sequentially washed with water, methanol, and then water again.

The copolymer samples were analyzed for residual toluene by methanol extraction/ a gas chromatograph (GC) with a flame ionization detector (FID) ("GC-FID"). The technique consisted of mixing the copolymer with methanol, withdrawing the methanol, and injecting the methanol into a GC. The area of the peaks obtained were compared to those obtained with standard toluene solutions. Additionally the copolymer samples were weighed and then dried overnight at 105C and reweighed to determine loss on drying. Based on the above it was determined that less than 200 ppm toluene per dry gram copolymer was present in both samples.

Dynamic Cephalosporin C testing is done by pumping a known concentration of Cephalosporin C at a fixed rate through a packed column of test copolymer and detecting the UV response to the effluent over time. The time and corresponding capacity at 1% leakage is useful for detecting problems associated with intra-bead diffusion problems (such the presence of a surface skin or the compression or damage of the macroreticular structure). These problems can be missed by just looking at total capacity, where the probe molecule has a long time to diffuse into the polymeric structure.

50 cc of test copolymer was used in a jacketed 2.54 cm diameter glass column with plungers to minimize freeboard and mixing. 10,000 ppm Cephalosporin C solution at 1 bed volume/hr at pH of 2.8 at 5°C was fed to the column. Effluent was analyzed continuously with 1% breakthrough defined as the point where 100 ppm Cephalosporin C was detected. 1% dynamic capacity was then defined as the total weight of Cephalosporin fed to the volume of test copolymer up until the point 1% breakthrough was observed.

The copolymer which had its remaining porogen removed using reduced pressure steam stripping was tested for dynamic Cephalosporin C uptake and was found to have a 1% breakthrough capacity of 44 g/liter. By comparison the copolymer which had its remaining porogen removed using methanol washing was tested for dynamic Cephalosporin C uptake and was found to have a 1% breakthrough capacity of 44 g/liter.

### Example 2

A spherical, nominally 650 micron harmonic mean size, macroreticular divinyl benzene/ ethyl vinyl benzene copolymer was prepared in a solution polymerization using toluene as the porogen and gelatin as a dispersant to achieve particle size control as in Example 1. Toluene remaining in the copolymer after polymerization was 45% on a copolymer dry weight basis.

The copolymer and mother liquor were transferred to an 80°C jacketed filter bottom vessel where the mother liquor was allowed to drain. Pressure in the vessel was reduced to 380 mm mercury absolute. Saturated steam at 2311 mm mercury absolute pressure was introduced to the top of the vessel. Steam was fed for five hours at one bed volume per hour. The vapor stream exiting the vessel was condensed and collected. An organic layer was observed in the condensate.

As a comparative example, a copolymer sample was taken after polymerization and sequentially washed with water, methanol, and then water again. The copolymer samples were analyzed for residual toluene by methanol extraction/ a gas chromatograph (GC) with a flame ionization detector (FID) ("GC-FID"). Less than 200 ppm toluene per dry gram copolymer was present in both samples.

The copolymer which had its porogen removed using reduced pressure steam stripping was tested for dynamic Cephalosporin C uptake and was found to have a 1% breakthrough capacity of 68 g/liter. By comparison the copolymer which had its porogen removed using methanol washing was tested for dynamic Cephalosporin C uptake and was found to have a 1% breakthrough capacity of 40 g/liter

### Example 3

A spherical, nominally 75 micron harmonic mean size, macroreticular divinyl benzene/ ethyl vinyl benzene copolymer was prepared in a solution polymerization using o-xylene and methyl isobutyl carbinol ("MIBC") as porogens and cellulose as a dispersant to achieve particle size control. The aqueous phase consisted of: DI water (98.9%), methyl hydroxy cellulose (0.5%), boric acid (0.4%), sodium lauryl sulfate (0.01%), and sodium hydroxide (0.2%). The organic phase consisted of 80% divinyl benzene (35.4%), benzoyl peroxide catalyst (0.7%), and o-xylene (29.0%) and methyl isobutyl carbinol (34.9%) porogens. The ratio of aqueous to organic was 1.3. The mixture was heated in a nitrogen atmosphere to 80C and held for 12 hours. After 12 hours the mixture was heated to 100C and held for five hours.

Typically a concentration of 0.025% methyl hydroxy cellulose is subsequently achieved (to allow the liquid to drain easily through a filter) by transferring the copolymer and mother liquor to a larger vessel, diluting and mixing the mixture with water, ceasing agitation, allowing the copolymer to float, draining a portion of the liquid from the bottom of the vessel, and repeating this operation until the target methyl hydroxy cellulose concentration target is achieved. However as a superior alternative, in this example, the copolymer and mother liquor were transferred to an 80°C jacketed filter bottom vessel by pumping the copolymer/ mother liquor slurry through a pipe into which water was also pumped to achieve dilution (0.025% methyl hydroxy cellulose) and mixing. This allowed the diluted mother liquor to drain.

Pressure in the vessel was reduced to 380 mm mercury absolute. Saturated steam at 2311 mm mercury absolute pressure was introduced to the top of the vessel. Steam was fed for five hours at one bed volume per hour. The copolymer removed was dry and free-flowing. For this material this is beneficial as comparable acetone-washed material was typically water rinsed and then dried to permit size classification.

The copolymer sample was analyzed for residual o-xylene and MIBC by dichloromethane extraction ("DCM")/ a gas chromatograph (GC) with a flame ionization detector (FID) ("GC-FID"). The technique consisted of mixing the copolymer with DCM, withdrawing the DCM, and injecting the DCM into a GC. The area of the peaks obtained were compared to those obtained with standard solutions. Additionally the copolymer sample was weighed and then dried overnight at 105C and reweighed to determine loss on drying. Less than 0.5% o-xylene and less than 0.1 ppm MIBC per dry gram resin were present.

Dynamic insulin capacity testing was done by pumping a known concentration of insulin at a fixed rate through a packed column of test polymer and detecting the UV response (at 280 nm) to the effluent over time. The time and corresponding insulin capacity at 1% leakage is useful for detecting problems associated with intra-bead diffusion problems (such the presence of a surface skin or the compression or damage of the macroreticular structure). These problems can be missed by just looking at total insulin capacity, where the probe molecule has a long time to diffuse into the polymeric structure. Test details were as follows:
Reagents Used in Testing
   - Milli-Q water or equivalent
   - Trifluoroacetic Acid (TFA) (Sigma #T-6508) or equivalent.
   - Bovine Insulin (Sigma # I 5500)
   - Test Column with asymmetry between 0.8 and 1.8 and efficiency > 2500 plates / meter for M grade resin with an unretained probe molecule. (> 1000 plates / meter for C grade resin and > 5000 plates /meter for S grade resin
Equipment Used
   - Varian ProStar™ 210 Solvent Delivery Module (or commercially equivalent pump)
   - Spectraflow ™ 783 Absorbance detector (or commercial equivalent)
   - Agilent Chemstation™ Interface and software for data acquisition and analysis (or commercial equivalent).
   - Agilent Digital Liguid Flowmeter Optiflow™ 1000 (Bodman H1000) or equivalent

A typical frontal adsorption curve and sample calculation was conducted as follows: A water/TFA solution was prepared by mixing 1.0 cc or one, 1 cc ampoules of TFA into 1 liter of Milli-Q™ water (using a graduated cylinder), in a ½-gallon amber glass container with a Teflon lid. An isulin solution was prepared by weighing 1.25 grams of insulin on weighing paper and transfering to a one liter bottle. 250 g of water/TFA solution was added and dissolved therein. A spectrophotometer was set to 291 nm, and the UV absorbance of the 5.0 mg/cc solution was measure and recorded: INF = AU , 5.0 mg/cc at 291. this value as the INF value was used to calculate total capacity.

Frontal testing was conducted as follows: A first reservoir in the pumping /testing system was filled with water/TFA solution. A second reservoir was filled with insulin solution. A prepared test column was attached to the pump. The test column was rinsed with 20 cc of with water/TFA solution at 2 cc/min. The pump was turned off and the pump feed was switched over to the insulin solution. The flow was set at 2 cc/min. Prior to starting the flow, the water/TFA solution was moved from the inlet line to the test column, replacing it with insulin solution. The Spectraflow™ 783 detector was set to monitor the column effluent at 291 nm, and the detector was zeroed. The pump and the Chemstation™ data acquisition system were set simultaneously. 200 cc of test solution was passed over the test column into a 200 cc volumetric flask. The collection time for the 200 cc was between 98.5 and 101.5 minutes. The column was disconnected and the system was cleaned. The dynamic capacity or 1% leakage capacity was determination as follows: mAU₀ and mAU ₘₐₓ on the UV profile was determined as follows. mAU₀ was determined and was the three-point average of the baseline of the profile, defined as between the start of the analysis and just before significant deflection has occurred. mAU ₘₐₓ was the plateau in the profile where there was less than 1% change in the signal. The time to 1% leakage (t_{1 %}) was defined as the time at which the detector response reached the 1% level, which is calculated by the formula: [(mAU ₘₐₓ -mAU ₀) X 0.01] + mAU ₀. Then the dynamic capacity was calculated by: [t_{1 %} x 5 (mg/cc) x 2 (cc/min)] / (cc resin in column).

Total capacity was measured as follows: The absorbance of the collected effluent from the column test on the spectrophotometer was measured by the following formula: The total capacity is given by: [(1 - EFF/INF) X 1000]/ (cc resin in column). A sample calculation of the dynamic capacity is as follows: mAU₀= 45.7 mAU ₘₐₓ = 506.2; detector response at 1% leakage [(506.2 - 45.7) X 0.01] + 45.7 = 50.3; time when the 1% response occurred = 33.8 minutes (read from a curve); dynamic capacity = : [33.8 x 5 (mg/cc) x 2 (cc/min)] / 4.8cc resin in column = 70 mg/cc. A sample total capacity measurement is made as follows: INF = 0.57 AU , 5.0 mg/cc at 291 EFF = 0.275 AU at 291 nm INF;total capacity =: [(1 - 0.275/0.57) X 1000]/ (4.8 cc resin in column) = 108 mg/cc. The dynamic capacity of the example copolymer was 73 mg/ cc. By comparison a sample prepared as above, but serially diluted with water, washed with acetone and water was found to have a dynamic capacity of 68 mg/ cc.

The present invention eliminates the use of solvents and yet preserves or improves the properties of the product. The following table shows the pore size distributions of the materials in Examples 1 and 2. The use of vacuum steam stripping did not lead to pore collapse, and improved the pore size distribution by creating increased pore volume of a desirable diameter.

**Table 1**

| Pore volume (cc/g) | | | | |
|---|---|---|---|---|
| Pore Size | Washed Only | Distilled & Washed | Distilled & Stripped | Stripped Only |
| 0 - 150 A | 0.853 | 0.842 | 0.768 | 0.830 |
| 150 - 250 A | 0.799 | 0.701 | 0.591 | 0.497 |
| 250 - 350 A | 0.009 | 0.159 | 0.355 | 0.515 |

**Table 2**

| The Ceph C results for the steam stripping studies were performed. The results are presented below: | |
|---|---|
| Sample | Capacity to 1 % Leakage |
| DVB/ EVB 650 micron MeOH washed only | 40 |
| DVB/ EVB 650 micron Distilled/ MeOH washed | 44 |
| DVB/ EVB 650 micron Distilled/ Steam Stripped | 44 |
| DVB/ EVB 650 micron Steam Stripped only | 68 |

Table 2 describes the superior dynamic capacity for Cephalosporin C of the vacuum steam stripped material versus the typical product that was first distilled for removal of most of the porogen, and was then washed with methanol for removal of the rest of the porogen. It also shows the unexpected higher Ceph C capacity of copolymer that is only vacuum steam stripped.

**Table 3**

| The total porosity of the samples was determined by nitrogen porosimetry. The results are presented below: | |
|---|---|
| Sample | Porosity (cm³ per g) |
| DVB/ EVB 650 micron MeOH washed only | 1.685 |
| DVB/ EVB 650 micron Distilled/ MeOH washed | 1.727 |
| DVB/ EVB 650 micron Distilled/ Steam Stripped | 1.741 |
| DVB/ EVB 650 micron Steam Stripped only | 1.866 |

Table 3 describes the result that use of vacuum steam stripping did not adversely affect the pore structure of the copolymer, and that surprisingly the use of vacuum steam stripping alone favorably modified the pore structure of the copolymer to yield better performance characteristics.

**Table 4**

| The insulin results for the in-line dilution and vacuum steam stripping studies are presented below: | |
|---|---|
| Sample | Capacity at 1% Leakage |
| DVB/EVB 75 micron in-line dilution vacuum steam stripped | 73 mg/cc |
| DVB/EVB 75 micron std batch-wise dilution acetone washed | 69 mg/cc |

Table 4 describes the superior dynamic capacity for insulin of the use of in-line dilution over batch-wise dilution, and the superior dynamic capacity for insulin of the use of both in-line dilution and vacuum steam stripping over batch-wise dilution and acetone washing.

In another variant of the invention, the resin is an adsorbent resin, and is optionally made free of the use of animal derived products, e.g. free of gelatin. The fact that it is gelatin free removes potential risks of microbial contaminants making their way into the ultimate drug, and creates a highly desired product having both excellent performance characteristics while not posing any risk of animal derived pathogens. Those of ordinary skill in the art will recognize that the embodiments described herein may be modified and altered without departing from the central spirit and scope of the invention

## Claims

1. An improved method of making macroreticular resin beads, said improvement comprising: steam stripping porogen from said resin beads under vacuum.

2. The method of claim 1 further comprising diluting to remove process aids from a mother liquor comprising said resin beads prior to said steam stripping.

3. The method of claim 1 further comprising maintaining a temperature below a polymerization temperature using said vacuum.

4. The method of claim 1 in which said process aids are selected from the group consisting of soaps, salts, and dispersion agents.

5. The method of claim 1 in which said resin is an adsorbent resin.

6. The method of claim 5 in which said method is free of the use of animal derived products.

7. A resin made using the improved method of claim 1.

8. A downstream product made utilizing the resin of claim 7 in a manufacturing process to make said product.

9. The downstream product of claim 8 which is a drug or precursor thereof.

10. The downstream product of claim 9 in which said drug or precursor thereof is selected from the group consisting of cephalosporin C and insulin.

11. An improved method of making resin beads, said improvement comprising: removing processing aids from a mother liquor by continuously diluting said mother liquor with a diluent such that said processing aids are removed from said resin beads without clogging a filter.

12. An improved method of making macroreticular resin beads, said improvement comprising: stripping porogen from said resin beads below a temperature of deformation of said resin beads using a vacuum.
